# EUROPEAN PATENT SPECIFICATION

(11) **EP 2 555 906 B1**
(45) Date of publication and mention of the grant of the patent: **02.04.2014**
(21) Application number: 11724738.7
(22) Date of filing: 05.04.2011
(51) Int. Cl.: B23Q 1/52, B23Q 39/04

(54) **MACHINE AND METHOD FOR THE THREADING OF SLEEVES**
MASCHINE UND VERFAHREN ZUM GEWINDESCHNEIDEN VON HÜLSEN
MACHINE ET PROCÉDÉ DE FILETAGE DE MANCHONS

(30) Priority: 09.04.2010 IT UD20100072
(43) Date of publication of application: 13.02.2013
(73) Proprietor: Danieli & C. Officine Meccaniche SpA, 33041 Buttrio (IT)
(72) Inventor: MATTANZA, Carlo, I-25100 Brescia (IT); LAVARONI, Andrea, I-33047 Remanzacco (IT)
(74) Representative: Petraz, Gilberto Luigi
(86) International application number: PCT/IB2011/000727
(87) International publication number: WO 2011/124966

(56) References cited:
- FR-A1- 2 809 649
- US-A- 3 270 592
- US-A- 4 064 774
- US-A- 4 512 223

## Description

### FIELD OF THE INVENTION

The present invention concerns a threading machine for sleeves or suchlike. The invention also concerns the relative threading method.

The invention is applied in the field of the preparation of sleeves, links, connectors, segments of tubes, joints and suchlike, to be subjected to cylindrical turning, conical turning, heading and internal threading on all or part of their surface.

In the following description the term sleeves is mainly used, which also covers, more generally, internally threaded elements of any type.

Sometimes the simple term threading will also be used, but this should be taken to mean in any case conical turning, cylindrical turning, heading or other auxiliary and/or accessory workings which can possibly be provided in this context.

### BACKGROUND OF THE INVENTION

It is known that the working in large and medium series of internally threaded sleeves (for example, but not only, according to the American Petroleum Institute and Premium norms) is performed by machine tools such as lathes, used as separate elements, or by means of machines with equipment having rotary tables defining a plurality of work stations where different processes are carried out in sequence.

In the case of a lathe, the unworked sleeve which has to be worked is clamped in a rotary apparatus and then made to rotate by a mandrel. The tools which are suitable to carry out cylindrical turning, conical turning, heading and threading are mounted statically on a bar and positioned axially inside the sleeve, in order to do the desired working, in the number of passes required by the cycle.

In the frequent case where the various work steps have to be carried out in sequence acting on both sides of the sleeve, at the end of working on a first side the tool is removed from the sleeve by retracting a mobile support of the tool, and the sleeve is rotated by 180° by tilting the rotary equipment, so as to dispose its second side facing the tool. Then the tool is again inserted inside the sleeve and the rotation of the mandrel is re-started so as to complete the working of the sleeve.

When the sleeve has been threaded on both sides, the mobile support of the tool is again retracted, the mandrel is stopped so that the operator, or an automatic device, can discharge the finished sleeve and load another one, thus allowing a new work cycle to start.

A solution is also known in which a rotary table with multiple work stations is used, which provides a station for loading the unworked sleeves, at least two work stations and a station for unloading the worked sleeve, which may or may not coincide with the loading station.

In this solution, the sleeve is loaded in the clamping system and the tools for the cylindrical turning, conical turning, heading and threading have a direction of movement (forward at the start of the work cycle and backward when the work is complete) substantially radial with respect to the center of the table.

In this known solution, after the first working step has been carried out, the sleeve is tilted by 180° so as to dispose its opposite end facing the tool or tools that have to do the working.

When the first step of the work cycle is finished, which may also provide conical or cylindrical turning, heading, beveling etc., the rotary table is rotated so that the semi-worked sleeve is taken to the threading station proper.

In this case too, first the work is done on one side of the sleeve, then the sleeve is turned over, and then the work is done on the opposite side.

This solution with the rotary table, with respect to the solution with the lathe, has the advantage that it increases overall productivity since it allows to make the various stations work simultaneously, so that while a first sleeve performs the preparatory work in the first work station, a second sleeve is threaded and finished in the second work station.

However, both the known solutions described above have the common disadvantage that the assembly of the sleeve with respect to the support and positioning equipment, and with respect to the tool that has to carry out the work, is done so that the side of the sleeve opposite the one where the tool enters is blind, that is, it is completely closed by the equipment itself and by the relative clamping system.

This creates a considerable operating problem because the chip and any other parts that are possibly removed and that are formed during the working, cannot be discharged, and remain inside the sleeve, forming a tangle that grows as the work proceeds.

The tangle of chip is particularly harmful for the formation of the finished thread, and as it winds around the rotary tool, it can also cause damage and malfunctions thereof.

This requires, practically with every working pass, that the machine is stopped so that the tangles and fragments of material that remain inside the sleeve can be removed, which operation is often necessarily manual.

Therefore, there is a problem of slowing down the working with a consequent loss of production, and a deterioration of the quality of the finished product, and also possible risks of accidents for the operators.

US-A-4.064.774, which forms the basis for the preambles of claims 1 and 5, describes an apparatus for working, for example threading, artifacts in which there are means to support the piece to be worked, substantially in cantilevered fashion.

Purpose of the present invention is therefore to achieve a machine and perfect a method which allow to solve the problems described above, increasing the productivity since continuous downtimes of the machine are avoided, improving the quality of the final product, since the risks are reduced of the chip removed from interfering with the working steps, and also reducing the risks of accidents for the operators.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

A machine for the cylindrical turning, conical turning, heading and threading of sleeves or suchlike according to the present invention, hereafter referred to sometimes, for ease of description, only as threading machine, comprises at least a work station in which there are means to hold the sleeve, of the gripper type.

According to the invention, the means to hold the sleeves are configured to substantially hold the sleeve in a cantilevered fashion, acting on its external surface and according to an orientation of the holding means which is substantially orthogonal to the direction of movement of the working tool, a direction which substantially coincides with the longitudinal axis of the sleeve.

In this way, the sleeve has both its sides open, where on each occasion a first side is available to receive and allow the insertion of the specific working tool, while the opposite side allows the free discharge of chip, fragments or other material which is produced during the working.

In the solution in which the working performed by the tool is accompanied by a jet of water or other liquid or fluid, for example through the tool itself or any other method, the jet of water, as well as its usual cooling action also has a mechanic effect of drawing and discharging the chip and fragments from the opposite side of the sleeve with respect to that where the tool is introduced.

The present invention also provides a rotary table with multiple work stations, wherein a first work station provides to load the unworked sleeves which have to be worked, a second station provides to work on a first side of the sleeve, a third station provides to work on the opposite side of the sleeve, and a further station, which may or may not coincide with the loading station, provides to unload the finished sleeve.

According to the invention, in this form of embodiment, the means to hold the sleeve are oriented in a substantially radial direction with respect to the rotary table, so that the axis of the sleeve, in the work position in the second and third station, which coincides with the axis of movement and working of the tool, is substantially tangential with respect to the ideal circumference defined by the rotary table.

In other words, in this case too, the holding means, when functioning, are disposed substantially cantilevered and oriented radially with respect to the rotary table, in order to support the sleeve with both its sides open and facing toward the outside. The tool moves radially with respect to the rotary table in order to enter and exit with respect to the inner space of the sleeve, so that one side of the sleeve is the entrance side for the tool while the opposite side, also open, allows the chip and other fragments to be freely discharged, possibly assisted by the jet of cooling water.

This solution also has the advantage that it does not require the sleeve to be turned over in each of the stations, which is required in the state of the art in order to invert the working side, because, passing from the second to the third work station, by rotating the rotary table, the sleeve is automatically disposed with its opposite side facing the work tool.

This advantage means that it is not necessary to carry out any reciprocal movement between the gripper-type holding means and the sleeve during the whole work cycle, thus reducing the drive operations, the wear on the motors and the possible micro-movements which can influence the quality of the work.

A further advantage is that, since it is always free during the whole working cycle, the side of the sleeve opposite to that in which the tool enters is available for possible operations to control the work in progress, including visual ones, and/or for auxiliary interventions, for example a jet of water, air, or other fluid for cleaning and/or cooling the sleeve during work.

In the loading and unloading stations as well, the positioning with tangential axis of the sleeve with respect to the circumference of the rotary table facilitates the relative operations, respectively unloading the finished sleeve and loading the unworked sleeve, which can be carried out with relative tangential introduction/removal movements of relative actuators.

This considerably reduces the general downtimes of the machine, because the loading/unloading times can be made to substantially coincide with the work times, so that there is no slowing down of the work cycle.

### BRIEF DESCRIPTION OF THE DRAWINGS

These and other characteristics of the present invention will now be described in detail, with reference to a particular form of embodiment, given as a non-restrictive example with the aid of the attached drawings wherein:
- fig. 1 is a schematic plane view of a form of embodiment of a threading machine according to the present invention;

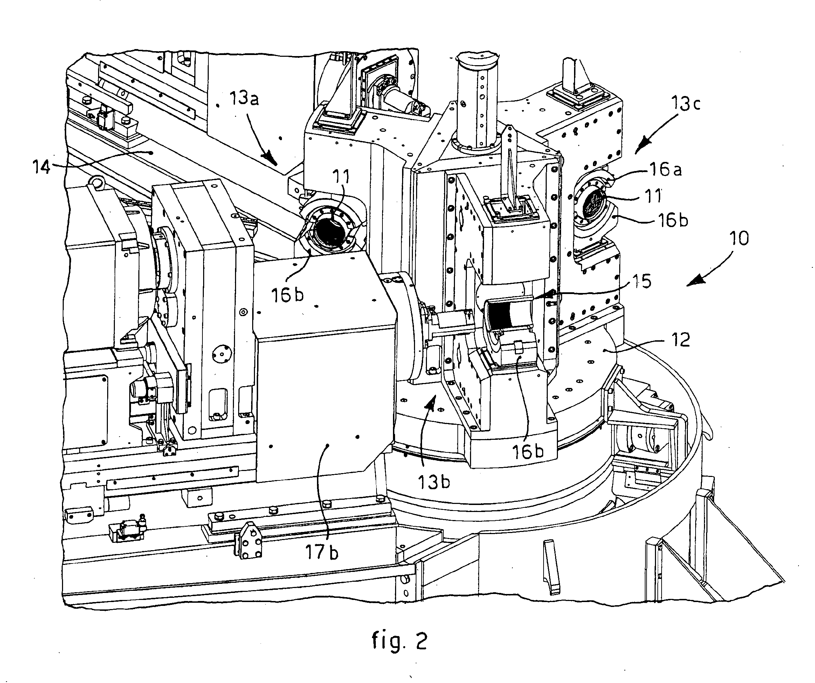

- fig. 2 shows a perspective view of the machine in fig. 1;
- figs. 3 to 7 show a work sequence of the machine in fig. 1 to make threaded sleeves;
- figs. 8 to 10 show a loading/unloading sequence of the unworked/finished sleeves carried out in the relative loading/unloading station.

### DETAILED DESCRIPTION OF A PREFERENTIAL FORM OF EMBODIMENT

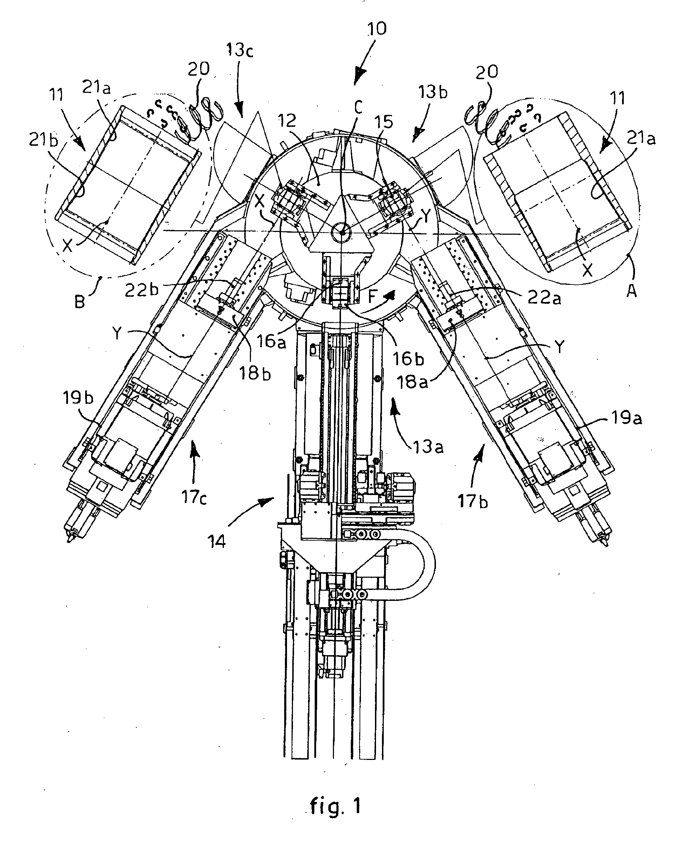

With reference to fig. 1, one form of embodiment of a machine 10 for the cylindrical turning, conical turning, heading and threading of sleeves 11 of the type with conical threading provided on the inner surface of the sleeve 11 is shown with a plane view.

The machine 10 is of the type with a rotary table 12 defining three work stations, respectively a first 13a for loading the unworked sleeve and for unloading the finished sleeve at the end of the cycle, a second 13b in which the cylindrical turning, conical turning, heading and threading of a first side of the sleeve (as in detail A) is performed, and a third 13c in which the cylindrical turning, conical turning, heading and threading of the second side of the sleeve is performed (as in detail B).

The rotary table 12 rotates around a center of rotation C according to a direction of rotation defined by the arrow F, which in this case is coherent with the work sequence.

The first station 13a of the rotary table 12 cooperates with a loader device 14, described in more detail hereafter.

Each of the stations 13a, 13b and 13c is provided with a holding device 15 of the gripper type, comprising a first jaw 16a and a second jaw 16b, which are disposed according to a substantially radial orientation with respect to the rotary table 12 and grip the sleeve 11 in correspondence with its external surface. In this way, once an unworked sleeve 11a is loaded onto the relative holding device 15 in correspondence with the loading/unloading station 13a, it is disposed substantially in cantilevered fashion with respect to the rotary table 12, with its longitudinal axis X oriented tangentially with respect to the ideal circumference defined by the rotary table 12.

In correspondence with the two work stations, second 13b and third 13c, there are two work units of a substantially known type, respectively 17b and 17c.

The units 17b and 17c comprise, in this case, a relative rotating head 18a, 18b mounted on a respective translation slider 19a, 19b, linearly mobile along a work axis Y which, in the work position, substantially coincides with the longitudinal axis X of the sleeve 11.

A tool-bearing bar 22a, 22b is mounted on each of the rotating heads 18a, 18b.

The linear movement of the rotating head 18a, in correspondence with the work station 13b for example, is actuated after a new sleeve 11 has been positioned in the correct work position by rotating the rotary table 12, to bring the bar 22a inside the relative sleeve 11 and start the various work steps.

The direction of the work axis of the unit 17b, which as has been said coincides with the longitudinal axis X of the sleeve 11 in the mounted position in correspondence with the work station 13b, is substantially tangential to the circumference defined by the rotary table 12, so that the sleeve 11 is disposed with both sides open and facing toward the outside.

In this way, a first side of the sleeve 11 allows the introduction of the rotating tool-bearing bar 22a of the work unit 17b, while the opposite side, which is also open, allows a free discharge of the chip 20 and other fragments (see enlarged detail A), which progressively form during the working.

In this way, with each operation carried out by the work unit 17b, the chip 20 is completely removed from inside the sleeve 11 and possibly broken, so that there is no risk of a tangle forming and that this tangle, as well as ruining the forming thread, will get wrapped around the bar 22a and interfere with the correct functioning of the rotating head 18a, thus damaging the work.

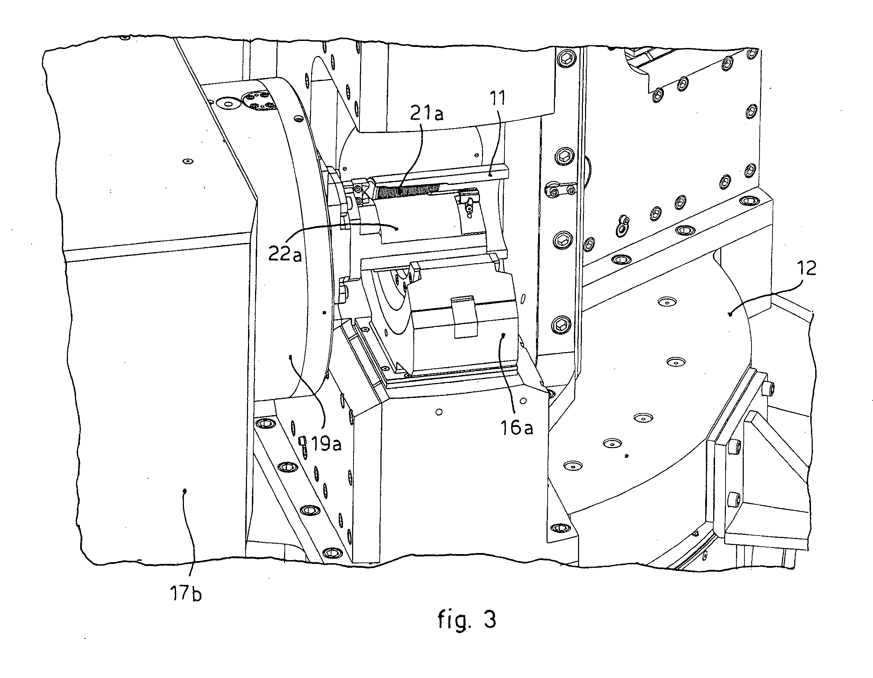

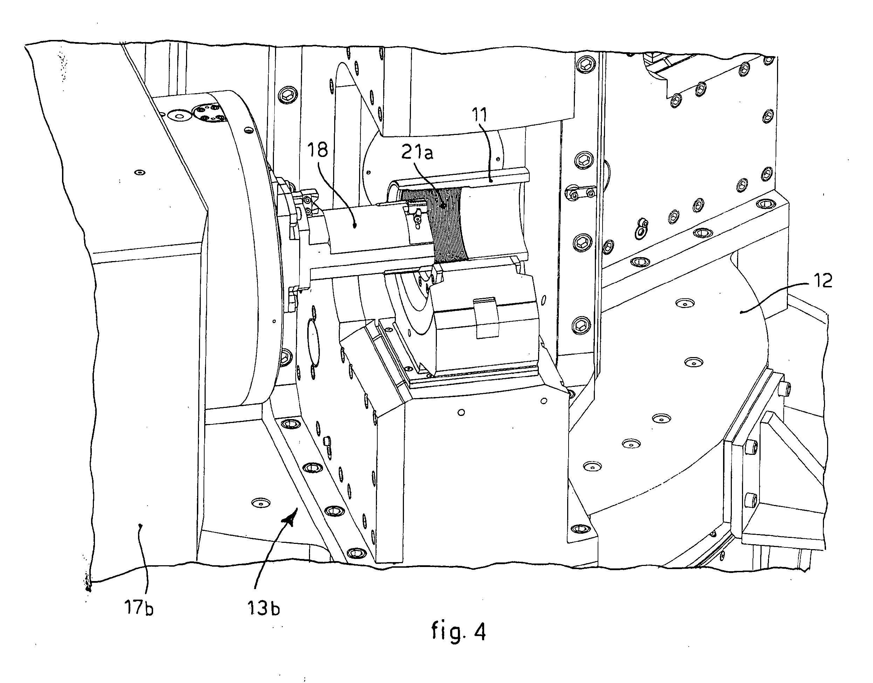

With reference to figs. 3 and 4, when the first part 21a of the cylindrical turning, conical turning, heading and threading (see enlarged detail A) has been carried out on a first side of the sleeve 11 in the second station 13b, the rotary table 12 rotates in order to bring the semi-worked sleeve 11 to the third station 13c.

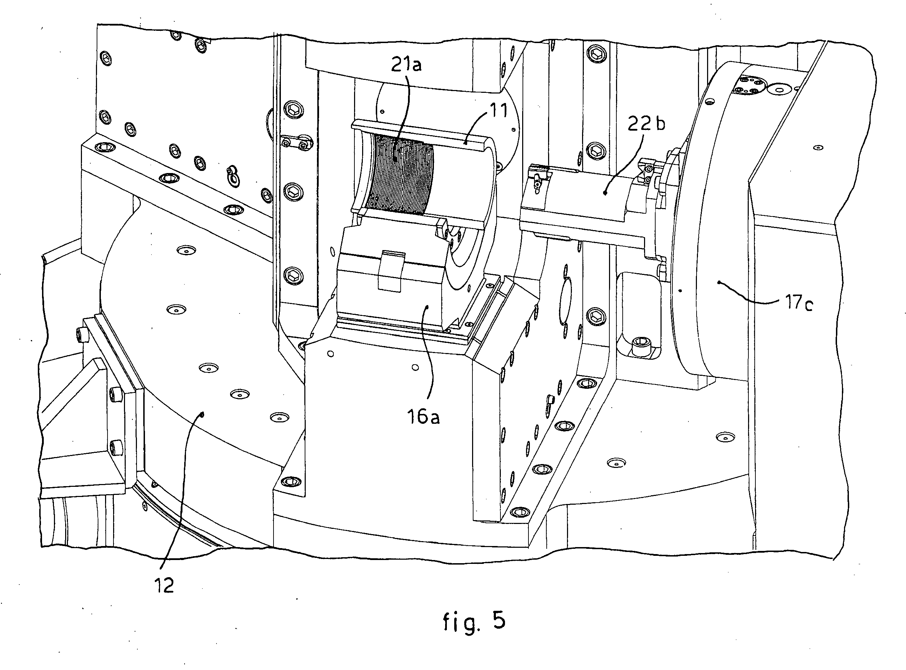

As can be seen in fig. 1, the rotation of the rotary table 12 from the second station 13b to the third station 13c allows to automatically dispose the sleeve 11 with its side still to be worked directly facing the unit 17c (fig. 5), so that no movement and/or opening of the holding device 15 is needed, and its jaws 16a and 16b always stay gripping the sleeve 11 being worked.

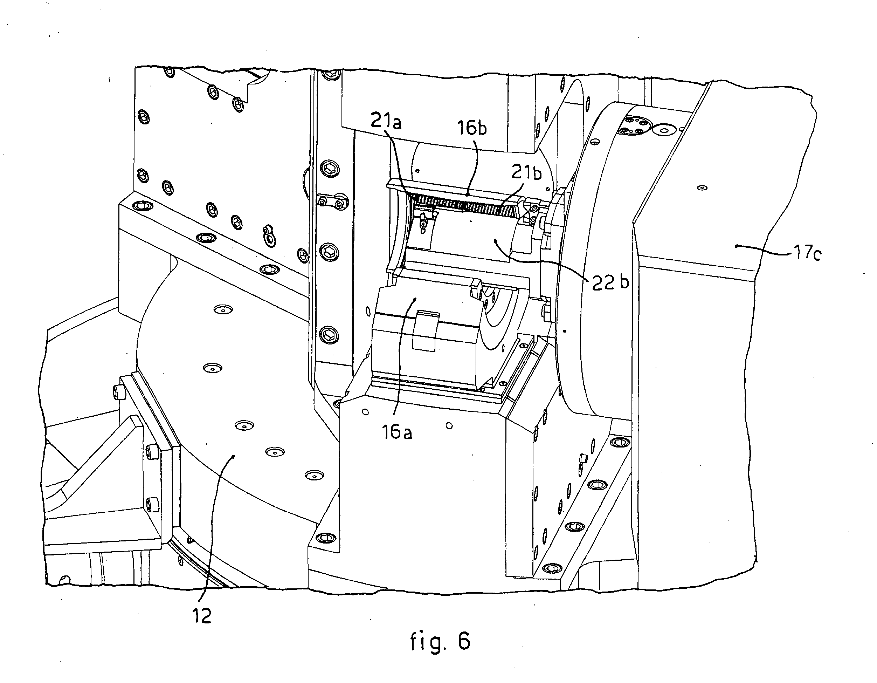

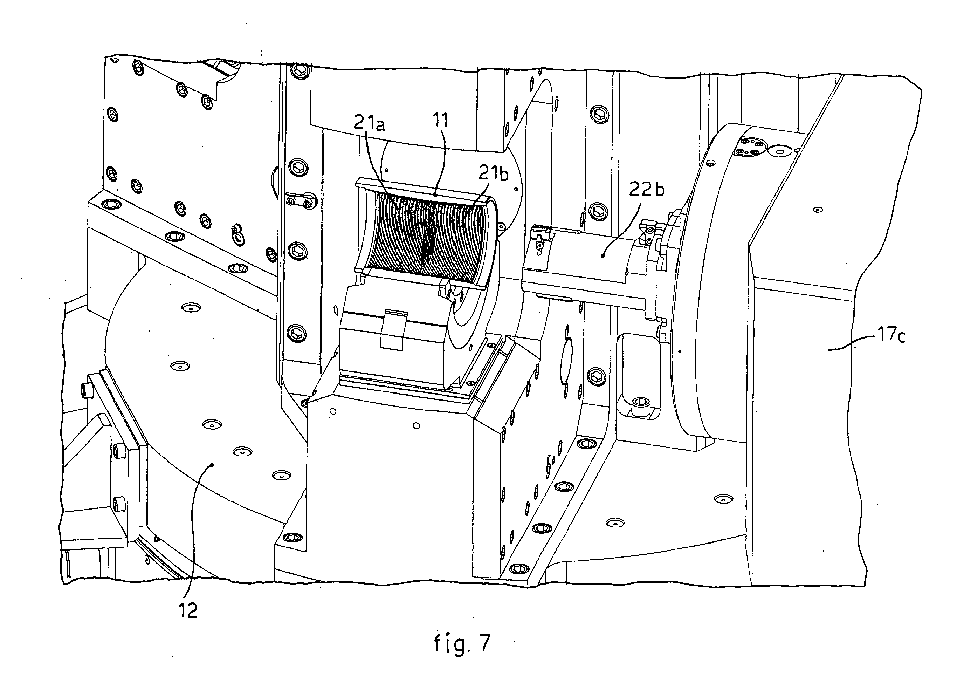

In this way the unit 17c can work the second part of the cylindrical turning, conical turning, heading and threading 21b (fig. 6), thus completing the work and at the end obtaining the finished sleeve, as shown in fig. 7. At the same time a new sleeve 11, which still has to be worked, has been brought into the second station 13b to carry out the first part 21a of the threading.

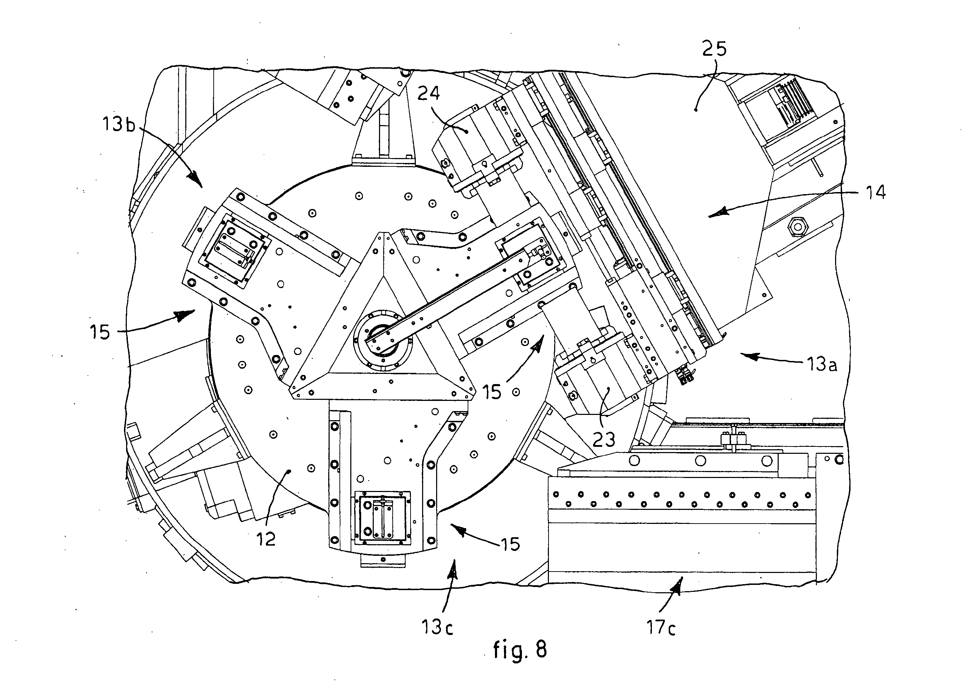

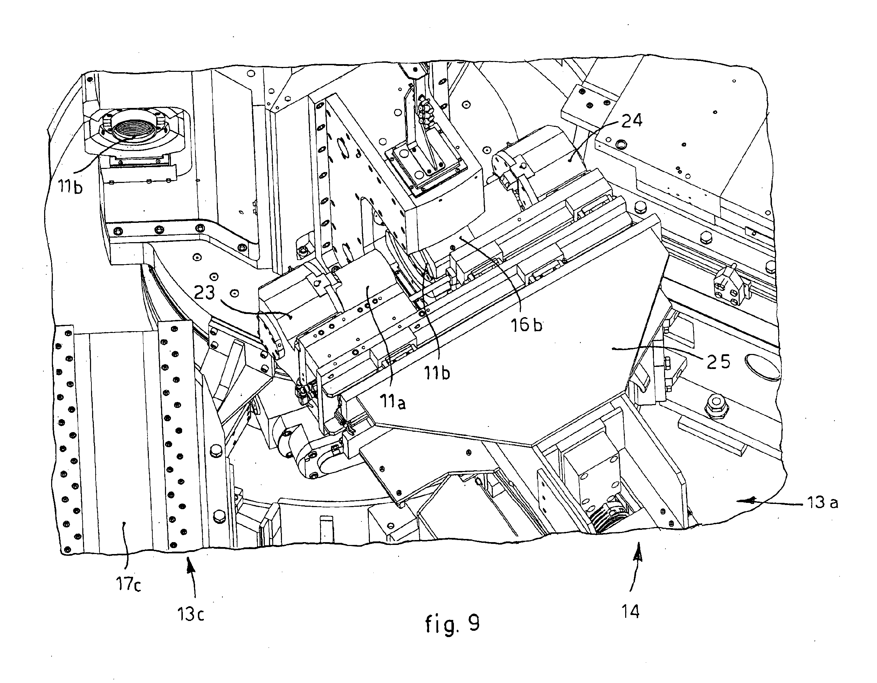

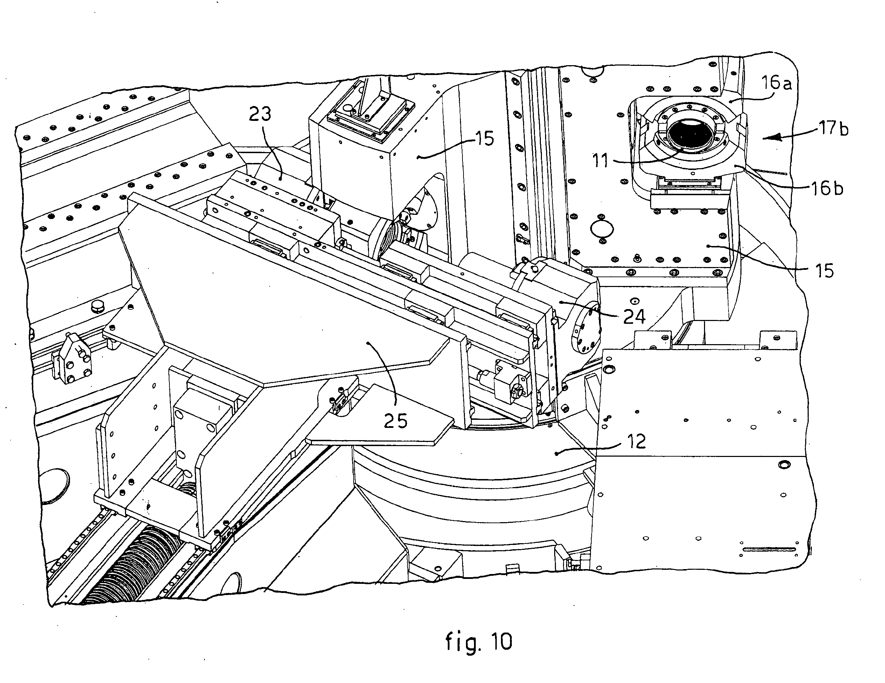

A new rotation of the rotary table 12 brings the finished sleeve into the first loading/unloading station 13a, in which it is unloaded and removed from the machine 10 as shown in figs. 8 to 11.

In fig. 8 it can be seen how the loader device 14 has an insertion element 23 to insert an unworked sleeve 11a, and a discharge element 24 to discharge a finished sleeve 11b, which, in the work position shown in the figures, are disposed on one side and the other of the holding means 15 mounted on the rotary table 12, in the step in which the finished sleeve 11b is in correspondence with the loading/unloading station 13a.

The insertion element 23 and the discharge element 24 have respective clamps on which the sleeves can be clamped, and they are mounted on a linear translation slider 25 which positions them, with movements in a radial direction with respect to the rotary table 12, in the correct work positions depending on the steps of the cycle.

When the finished sleeve 11b moves into the loading/unloading station 13 a thanks to the rotation of the rotary table 12 (and at the same time an unworked sleeve 11a moves into the second work station 13b and a semi-worked sleeve moves into the third work station 13c) the insertion element 23 and the discharge element 24 are disposed with their work axes aligned to the axis of the finished sleeve 11b mounted in the relative gripper-type holding means 15.

From this position the discharge element 24 is taken with the relative clamps into a position of proximity to the finished sleeve 11b mounted in the gripper-type holding mean 15. The clamps of the discharge element 24 then grip the finished sleeve 11b. Subsequently, after the jaws 16a, 16b have been opened by means of a single translation movement in a substantially tangential direction with respect to the rotary table 12, and coinciding with the longitudinal axis X of the finished sleeve 11b, the discharge element 24 removes the finished sleeve 11b from the holding mean 15, and at the same time the insertion element 23 inserts a sleeve 11 a, previously mounted in the relative clamps, inside the holding mean 15. Then the jaws 16a, 16b are closed in order to clamp the unworked sleeve 11 a, and once the clamps of the insertion element 23 are released, the latter is detached, and the slider 25 can distance the insertion element 23 (empty) and the discharge element 24, together with the finished sleeve 11b mounted between the clamps of the latter.

In this way, it can be seen how the discharge from the machine of the finished sleeve 11b and the insertion into the machine of the unworked sleeve 11a take place substantially at the same time and with a single movement of the elements 23 and 24 in a direction tangential to the rotary table 12, also thanks to the assembly disposition of the sleeves 11 with respect to the rotary table 12.

Thanks to the solution according to the present invention, it is therefore possible to considerably increase the quality of the work thanks to the fact that the chip 20 and fragments which are produced during the threading operations and possible turning, beveling or other, are directly discharged during the working from the side opposite that where the tool is introduced.

The machine 10 according to the present invention also determines a considerable increase in production, because all the downtimes of the machine needed in the state of the art to discharge the chip and other fragments, often manually, from inside the machine, have been substantially eliminated

The safety for the operators is also much better, because manual interventions and operations which are often carried out with machine parts still moving and/or at high temperatures, are no longer required.

The positioning of the sleeve with both sides open allows to avoid the need to provide pivoting equipment because the sleeve can always keep the same position during the entire working cycle.

The use of jets of water and/or other fluids inside the sleeve, during the working, promotes the removal of chip and fragments and their removal outside the sleeve 11 before proceeding to further working.

Furthermore, the positioning of the sleeve with its axis tangential to the circumference of the rotary table also facilitates and speeds up the loading/unloading operations, which can be carried out with insertion/discharge movements that are equally tangential and simultaneous, so that the relative times do not overlap and do not affect the cycle times of the machine with respect to other workings.

It is understood that the working sequence can be different from the one described, and also that other workings can be carried out on the sleeve 11, in addition to and/or at the same time as the threading, in one or other of the work stations described above, exploiting the assembly position of the sleeves 11 with both sides open and facing the outside.

## Claims

1. Machine for the cylindrical turning, conical turning, heading and threading of sleeves (11) or suchlike, comprising at least a work station (13a, 13b, 13c) in which means (15) for holding the sleeve are present, of the gripper-type (16a, 16b), and at least a work unit (17b, 17c) configured to carry out a threading operation on said sleeve (11), and a rotary table (12) defining a plurality of work stations (13a, 13b, 13c) disposed in sequence with respect to each other, said means (15) for holding the sleeve being configured to support the sleeve (11) substantially in cantilevered fashion, acting on its external surface and according to an orientation of said holding means (15) that is substantially orthogonal to the direction of movement (Y) of said work unit (17b, 17c), **characterized in that** the holding means (15) of the sleeve (11) are oriented in a substantially radial direction with respect to the rotary table (12), so that the longitudinal axis (X) of the sleeve (11), which coincides with the axis (Y) of movement and work of the unit (17b, 17c), is substantially tangential with respect to the ideal circumference defined by said rotary table (12).

2. Machine as in claim 1, **characterized in that** said work stations comprise at least a first station (13a) for loading the unworked sleeves and for unloading the worked sleeves, a second station (13b) in which a first part (21a) of the cylindrical turning, conical turning, heading and threading is performed on a first side of the sleeve (11), and a third station (13c) in which a second part (21 b) of the cylindrical turning, conical turning, heading and threading is performed on an opposite side of the sleeve (11).

3. Machine as in any claim hereinbefore, **characterized in that** said work units (17b, 17c) comprise means for delivering a stream of fluid generating a mechanical effect of discharging the chip or fragments (20) from inside the sleeve (11).

4. Machine as in any claim hereinbefore, **characterized in that** it comprises a loader device (14) positioned in correspondence with said loading/unloading station (13a), said loader (14) including at least an element (23) for inserting an unworked sleeve (11a) into the machine, and a mating discharge element (24) to discharge a worked sleeve (11b) from the machine, said insertion (23) and discharge (24) elements having at least an operating position with the respective work axes aligned with the axis of the sleeve to be discharged disposed in the relative holding means (15), and being mobile in a direction substantially tangential to the circumference defined by the rotary table (12) in order to perform the respective operations to discharge the finished sleeve (11b) and simultaneously to insert the unworked sleeve (11a) into the holding means (15) disposed in correspondence with said loading/unloading station (13a).

5. Method for the cylindrical turning, conical turning, heading and threading of sleeves (11) or suchlike, in which holding means of the gripper type dispose in an operating position at least a sleeve (11) to be worked in at least a work station (13a, 13b, 13c), said position cooperating with at least a work unit (17b, 17c) configured to perform a threading operation on said sleeve (11), in which a rotary table (12) defining a plurality of work stations (13a, 13b, 13c) disposed in sequence with respect to each other is used, wherein said holding means (15) support the sleeve (11) substantially in cantilevered fashion, acting on its external surface and according to an orientation of said holding means (15) that is substantially orthogonal to the direction of movement (Y) of said work unit (17b, 17c), **characterized in that** it provides to position the holding means (15) of the sleeve (11) in a substantially radial direction with respect to the rotary table (12), so that the longitudinal axis (X) of the sleeve (11), which coincides with the axis (Y) of movement and work of the work unit (17b, 17c), is substantially tangential with respect to the ideal circumference defined by said rotary table (12).

6. Method as in claim 5, **characterized in that** it provides to move said sleeve from a first loading station (13a) to a second work station (13b) in which a first part (21a) of the threading is performed on a first side of the sleeve (11), then to rotate said rotary table (12) in order to take said sleeve (11) to a third work station (13c) in which a second part (21b) of the threading is performed on a second side of the sleeve (11).

7. Method as in claim 6, **characterized in that** it provides, in said work station (13a), a step of loading an unworked sleeve (11a) into said holding means, and a simultaneous step of unloading a finished sleeve (11b) from said holding means (15), wherein said loading and unloading steps are performed respectively by means of an insertion element (23) and a discharge element (24), which are first aligned with their work axes to the axis of the finished sleeve (11b) mounted in said holding means (15), then brought progressively closer to said finished sleeve (11b) in order to remove it from said holding means (15) and at the same time to insert an unworked sleeve (11a) into said holding means.

## Patentansprüche

1. Vorrichtung zum zylindrischen Drehen, konischen Drehen, Kopfbearbeiten und Gewindeschneiden von Hülsen (11) oder dergleichen, umfassend wenigstens eine Arbeitsstation (13a, 13b, 13c) in der Mittel (15) zum Halten der Hülse nach Art eines Greifers (16a, 16b) vorgesehen sind, und wenigstens eine Bearbeitungseinheit (17b, 17c), die in der Weise ausgebildet ist, dass sie eine Gewindebearbeitung an der Hülse (11) ausführen kann, und einen Drehtisch (12), der eine Vielzahl von Arbeitsstationen (13a, 13b, 13c) definiert, die hintereinander angeordnet sind, wobei die Mittel (15) zum Halten der Hülse dazu ausgestaltet sind, die Hülse (11) in einer im Wesentlichen fliegenden Art und Weise zu halten und auf die äußere Oberfläche der Hülse in Abhängigkeit von der Ausrichtung der Haltemittel (15), d.h. im Wesentlichen orthogonal zur Bewegungsrichtung (Y) der Bearbeitungseinheit (17b, 17c), einzuwirken, **dadurch gekennzeichnet**, das die Haltemittel (15) der Hülse (11) in einer im Wesentlichen radialen Richtung relativ zum Drehtisch (12) ausgerichtet sind, sodass die Längsachse (X) der Hülse (11), die mit der Achse (Y) der Bewegung und Bearbeitung der Einheit (17b, 17c) zusammenfällt, im Wesentlichen tangential zu einem idealen Umfang verläuft, der durch den Drehtisch (12) definiert wird.

2. Vorrichtung nach Anspruch 1, **dadurch gekennzeichnet**, das die Bearbeitungsstationen wenigstens eine erste Station (13a) zum Laden der unbearbeiteten Hülsen und zum Entladen der bearbeiteten Hülsen, eine zweite Station (13b), in der ein erster Teil (21a) der zylindrischen Drehbearbeitung, der konischen Drehbearbeitung, der Kopfbearbeitung und der Gewindebearbeitung an einer ersten Seite der Hülse (11) durchgeführt wird, und eine dritte Station (13c), in der ein zweiter Teil (21 b) der zylindrischen Drehbearbeitung, konischen Drehbearbeitung, der Kopfbearbeitung und der Gewindebearbeitung an einer gegenüberliegenden Seite der Hülse (11) erfolgt, umfasst.

3. Vorrichtung nach einem der vorhergehenden Ansprüche, **dadurch gekennzeichnet, dass** die besagten Bearbeitungseinheiten (17b, 17c) Mittel zum Aussenden eines Flüssigkeitsstromes umfassen, der einen mechanischen Effekt zum Ausbringen der Späne oder Bruchstücke (20) aus der Innenseite der Hülse (11) erzeugt.

4. Vorrichtung nach einem der vorhergehenden Ansprüche, **dadurch gekennzeichnet, dass** diese weiterhin eine Beladungseinrichtung (14) umfasst, die korrespondierend zu der Beladungs-/ Entladungsstation (13a) angeordnet ist, wobei die Beladungseinrichtung (14) wenigstens ein Element (23) zum Einführen einer unbearbeiteten Hülse (11a) in die Vorrichtung sowie ein zugehöriges Ausgabeelement (24) umfasst, welches eine bearbeitete Hülse (11b) aus der Vorrichtung ausgibt, wobei das besagte Einführelement (23) und Ausgabeelement (24) wenigstens eine Arbeitsstellung besitzen, in der die betreffende Bearbeitungsachse mit der Achse der auszuwerfenden Hülse, die in den Haltemitteln (15) aufgenommen ist, fluchtet, und das Einführelement und Ausgabeelement in einer im Wesentlichen tangential zu dem durch den Drehtisch (12) definierten Umfang verlaufenden Richtung beweglich sind, um die betreffenden Arbeitsschritte zum Auswerfen der fertig bearbeiteten Hülse (11b) und zum gleichzeitigen Einführen der unbearbeiteten Hülse (11a) in die Haltemittel (15) durchzuführen, welche korrespondierend zu der Beladungs-/ Entladungsstation (13a) angeordnet sind.

5. Verfahren zum zylindrischen Drehen, konischen Drehen, zur Kopfbearbeitung und zum Gewindeschneiden von Hülsen (11) oder dergleichen, in dem Haltemittel nach Art von Greifern wenigstens eine zu bearbeitende Hülse (11) in einer Bearbeitungsstellung in einer Bearbeitungsstation (13a, 13b, 13c) anordnen, wobei die Stellung mit wenigstens einer Bearbeitungseinheit (17b, 17c) zusammenwirkt, die dazu ausgestaltet ist, eine Gewindebearbeitung an der Hülse (11) durchzuführen; bei dem ein Drehtisch (12), welcher eine Vielzahl von Arbeitsstationen (13a, 13b, 13c) definiert, die hintereinander angeordnet sind verwendet wird, wobei die besagten Haltemittel (15) die Hülse (11) in einer im Wesentlichen fliegenden Weise halten, und auf die äußere Oberfläche und in Abhängigkeit von einer Ausrichtung der besagten Haltemittel (15), d.h. im Wesentlichen orthogonal zu der Bewegungsrichtung (Y) der besagten Bearbeitungseinheit (17b, 17c), einwirken, **dadurch gekennzeichnet, dass** die Haltemittel (15) der Hülse (11) bezogen auf den Drehtisch (12) in einer im Wesentlichen radialen Richtung positioniert werden, derart, dass die Längsachse (X) der Hülse (11), die mit der Bewegungs- und Bearbeitungsachse (Y) der Bearbeitungseinheit (17b, 17c) zusammenfällt, im Wesentlichen tangential zu dem idealen Umfang verläuft, der durch den besagten Drehtisch (12) definiert wird.

6. Verfahren nach Anspruch 5, **dadurch gekennzeichnet, dass** die besagte Hülse aus einer ersten Beladungsstation (13a) zu einer zweiten Bearbeitungsstation (13b) bewegt wird, in der ein erster Teil (21 a) der Gewindebearbeitung an einer ersten Seite der Hülse (11) durchgeführt wird, und im Anschluss daran der Drehtisch (12) gedreht wird, um die besagte Hülse (11) zu einer dritten Bearbeitungsstation (13c) zu verbringen, in der ein zweiter Teil (21 b) der Gewindebearbeitung an einer zweiten Seite der Hülse (11) durchgeführt wird.

7. Verfahren nach Anspruch 6, **dadurch gekennzeichnet, dass** in der besagten Bearbeitungsstation (13a) ein Verfahrensschritt zum Laden einer unbearbeiteten Hülse (11a) in die besagten Haltemittel (15) und ein gleichzeitiger Verfahrensschritt zum Entladen einer bearbeiteten Hülse (11 b) aus den Haltemitteln (15) erfolgen, wobei die besagten Lade- und Entladeschritte entsprechend mit Hilfe eines Einführelements (23) und eines Auswurfelements (24) durchgeführt werden, die zuerst mit ihren Arbeitsachsen auf die Achse der bearbeiteten, in den besagten Haltemitteln (15) aufgenommenen Hülse (11b) ausgerichtet werden und dann zunehmend dichter an die besagte bearbeitete Hülse (11b) herangeführt werden, um diese aus den besagten Haltemitteln (15) zu entfernen und gleichzeitig eine unbearbeitete Hülse (11a) in die besagten Haltemittel einzusetzen.

## Revendications

1. Machine de tournage cylindrique, de tournage conique, de refoulement et de filetage de manchons (11) ou autres, comprenant au moins un poste d'usinage (13a, 13b, 13c) dans lequel sont présents des moyens (15) pour maintenir le manchon, du type pince (16a, 16b), et au moins une unité d'usinage (17b, 17c) configurée pour effectuer une opération de filetage sur ledit manchon (11), et une table rotative (12) définissant une pluralité de postes d'usinage (13a, 13b, 13c) disposés en séquence l'un par rapport à l'autre, lesdits moyens (15) pour maintenir le manchon étant configurés pour supporter le manchon (11) sensiblement en porte-à-faux, agissant sur sa surface extérieure et selon une orientation desdits moyen de maintien (15) qui est sensiblement orthogonale à la direction de déplacement (Y) de ladite unité d'usinage (17b, 17c), **caractérisée par le fait que** les moyens de maintien (15) du manchon (11) sont orientés dans une direction sensiblement radiale par rapport à la table rotative (12), de sorte que l'axe longitudinal (X) du manchon (11), qui coïncide avec l'axe (Y) de déplacement et d'usinage de l'unité (17b, 17c), soit sensiblement tangentiel à la circonférence idéale définie par ladite table rotative (12).

2. Machine selon la revendication 1, **caractérisée par le fait que** lesdits postes d'usinage comprennent au moins un premier poste (13a) pour le chargement des manchons non usinés et pour le déchargement des manchons usinés, un deuxième poste (13b) dans lequel une première partie (21a) du tournage cylindrique, du tournage conique, du refoulement et du filetage est réalisée d'un premier côté du manchon (11), et un troisième poste (13c) dans lequel une deuxième partie (21b) du tournage cylindrique, du tournage conique, du refoulement et du filetage est réalisée d'un côté opposé du manchon (11).

3. Machine selon l'une quelconque des revendications précédentes, **caractérisée par le fait que** lesdites unités d'usinage (17b, 17c) comprennent des moyens pour fournir un flux de fluide générant un effet mécanique d'évacuation de copeaux ou de fragments (20) de l'intérieur du manchon (11).

4. Machine selon l'une quelconque des revendications précédentes, **caractérisée par le fait qu'**elle comprend un dispositif de chargement (14) positionné en correspondance avec ledit poste de chargement/déchargement (13a), ledit chargeur (14) comportant au moins un élément (23) pour introduire un manchon non usiné (11a) dans la machine, et un élément d'évacuation correspondant (24) pour évacuer un manchon usiné (11b) de la machine, lesdits éléments d'introduction (23) et d'évacuation (24) présentant au moins une position de fonctionnement avec les axes d'usinage respectifs alignés sur l'axe du manchon à évacuer disposé dans les moyens de maintien respectifs (15), et mobile dans une direction sensiblement tangentielle à la circonférence définie par la table rotative (12), pour effectuer les opérations respectives pour évacuer le manchon fini (11b) et pour introduire simultanément le manchon non usiné (11a) dans les moyens de maintien (15) disposés en correspondance avec ledit poste de chargement/ déchargement (13a).

5. Procédé de tournage cylindrique, de tournage conique, de refoulement et de filetage de manchons (11) ou autres, dans lequel des moyens de maintien du type pince disposent en une position de fonctionnement au moins un manchon (11) à usiner dans au moins un poste de travail (13a, 13b, 13c), ladite position coopérant avec au moins une unité d'usinage (17b, 17c) configurée pour effectuer une opération de filetage sur ledit manchon (11), dans lequel est utilisée une table rotative (12) définissant une pluralité de postes d'usinage (13a, 13b, 13c) disposés en séquence l'un par rapport à l'autre, dans lequel lesdits moyens de maintien (15) supportent le manchon (11) sensiblement en porte-à-faux, agissant sur sa surface extérieure et selon une orientation desdits moyens de maintien (15) qui est sensiblement orthogonale à la direction de déplacement (Y) de ladite unité d'usinage (17b, 17c), **caractérisé par le fait qu'**il prévoit de positionner les moyens de maintien (15) du manchon (11) dans une direction sensiblement radiale par rapport à la table rotative (12), de sorte que l'axe longitudinal (X) du manchon (11), qui coïncide avec l'axe (Y) de déplacement et d'usinage de l'unité d'usinage (17b, 17c), soit sensiblement tangentiel à la circonférence idéale définie par ladite table rotative (12).

6. Procédé selon la revendication 5, **caractérisé par le fait qu'**il prévoit de déplacer ledit manchon d'un premier poste de chargement (13a) à un deuxième poste d'usinage (13b) dans lequel est effectuée une première partie (21a) du filetage d'un premier côté du manchon (11), puis de faire tourner ladite table rotative (12) pour amener ledit manchon (11) à un troisième poste d'usinage (13c) dans lequel est effectuée une deuxième partie (21 b) du filetage d'un deuxième côté du manchon (11).

7. Procédé selon la revendication 6, **caractérisé par le fait qu'**il prévoit, dans ledit poste d'usinage (13a), une étape de chargement d'un manchon non usiné (11a) dans lesdits moyens de maintien, et une étape simultanée de déchargement d'un manchon fini (11b) desdits moyens de maintien (15), dans lequel lesdites étapes de chargement et de déchargement sont effectuées respectivement au moyen d'un élément d'introduction (23) et d'un élément d'évacuation (24) qui sont tout d'abord alignés par leurs axes d'usinage sur l'axe du manchon fini (11b) monté dans lesdits moyens de maintien (15), puis amenés progressivement plus près dudit manchon fini (11b) pour le retirer desdits moyens de maintien (15) et en même temps pour introduire un manchon non usiné (11a) dans lesdits moyens de maintien.
